# EUROPÄISCHE PATENTSCHRIFT

(11) **EP 2 659 243 B1**
(45) Veröffentlichungstag und Bekanntmachung des Hinweises auf die Patenterteilung: **18.02.2015**
(21) Anmeldenummer: 11837284.6
(22) Anmeldetag: 30.12.2011
(51) Int. Cl.: G01H 1/12

(54) **SCHWINGUNGSMESSGERÄT**
VIBRATION MEASURING DEVICE
APPAREIL DE MESURE DE VIBRATIONS

(30) Priorität: 30.12.2010 DE 102010056466
(43) Veröffentlichungstag der Anmeldung: 06.11.2013
(73) Patentinhaber: PRÜFTECHNIK Dieter Busch AG, 85737 Ismaning (DE)
(72) Erfinder: BUSCH, Dieter, 85737 Ismaning (DE); KUCHLER, Alexander, 85716 Unterschleissheim (DE); LYSEN, Heinrich, 85748 Garching (DE)
(86) Internationale Anmeldenummer: PCT/DE2011/075326
(87) Internationale Veröffentlichungsnummer: WO 2012/097792

(56) Entgegenhaltungen:
- JP-A- 2001 066 179
- US-A- 6 006 164
- US-A1- 2002 129 653
- US-A1- 2007 245 827
- US-B1- 7 689 373

## Beschreibung

Die Erfindung betrifft ein tragbares Schwingungsmessgerät, das sehr kompakt ausgeführt werden kann, eine Messung über einen breiten Frequenzbereich ermöglicht und leicht und schnell von Hand an eine Messstelle angelegt werden kann.

US-Patent 6,006,164 beschreibt einen Datensammler in Form eines tragbaren Schwingungsmessgeräts, der über einen Messbolzen an die Messstelle gekoppelt wird und die ermittelten Schwingungsdaten an einen tragbaren Rechner übermittelt, während das Messgerät noch weitere Schwingungsdaten aufnimmt.

US Patent 7,689,373 beschreibt ein System zu Sammeln und Analysieren von Schwingungsdaten mit mindestens einem Sensor, der über eine USB-Schnittstelle mit einem Datensammler verbunden wird. Von der Firma C-Cubed wird unter dem Namen Dataq-CF2 eine Compact Flash Karte vertrieben, die in einen Pocket PC eingesetzt und mit Schwingungssensoren verbunden werden kann. In Verbindung mit einem Ruggedized Pocket PC der Firma TDS ist die Aufnahme und Analyse von Schwingungsdaten auch unter härtesten Bedingungen möglich. In der Bauform als Ruggedized PC sind neben normalen Notebooks und PDAs auch Tablet PCs verfügbar.

Nachteil dieser Lösungen ist es, dass in allen Bauformen der Datensammler bzw. der Pocket PC mit an die Messstelle für die Schwingungsmessung gebracht werden muss.

Die US 2002/0129653 A1 D1 betrifft einen Roboter mit verschiedenen beweglichen Teilen der auf einem Fundament gelagert ist und Schwingungssensoren aufweist, um eine präzise Steuerung der Bewegungen des Roboters zu erreichen.

Die JP 2001-066179 A betrifft ein mobiles Schwingungsmessgerät mit zwei in unterschiedlichen Frequenzbereichen empfindlichen Sensoren, wobei ein gemeinsames Gehäuse für die beiden Sensoren vorgesehen ist, an welchem die beiden Sensoren fest angebracht sind.

US 2007/0245827 A1 betrifft ein Schwingungsmessgerät gemäß dem Oberbegriff von Anspruch 1, welches ein gemeinsames Substrat für drei unterschiedliche Schwingungssensoren aufweist. Das Substrat kann monolithisch oder als Verbundsubstrat mit unterschiedlichen Schichten aufgebaut sein.

Aufgabe der Erfindung ist es nun, ausgehend von den genannten Geräten eine noch kompaktere Lösung für tragbare Schwingungsmessgeräte zu finden, die dennoch einen breiten Frequenzbereich ermöglicht, wie er nur durch die Verwendung von mindestens zwei Sensoren erreicht werden kann. Erfindungsgemäss sind Bauformen möglich, deren äussere Gestaltung der von USB-Speichersticks, MP3-Playern oder Voice Recorder entspricht.

Diese Aufgabe wird erfindungsgemäß durch ein tragbares Schwingungsmessgerät gemäß Anspruch 1 gelöst, wobei der Träger für die Sensoren so gestaltet wird, dass er die Ankopplung des Schwingungssensors an das Messeobjekt in dem Frequenzbereich unterstützt, für den der jeweilige Sensor empfindlich ist. Dies geschieht durch geschickte. Wahl der Kopplung der Bereiche des Trägers, auf denen der jeweilige Sensor angebracht wird, an den übrigen Träger.

Die Erfindung wird im Folgenden anhand der Figuren beschrieben.
Fig. 1 zeigt die Aufsicht auf ein Schwingungsmessgerät, bei dem das Oberteil des Gehäuses entfernt worden ist.
Fig. 2 zeigt einen Querschnitt durch das Schwingungsmessgerät der Fig. 1.
Fig. 3 zeigt einen Querschnitt durch eine andere Bauform des Schwingungsmessgerätes.
Fig. 4 stellt ein Koppelelement sowie Teile von Platinen dar.

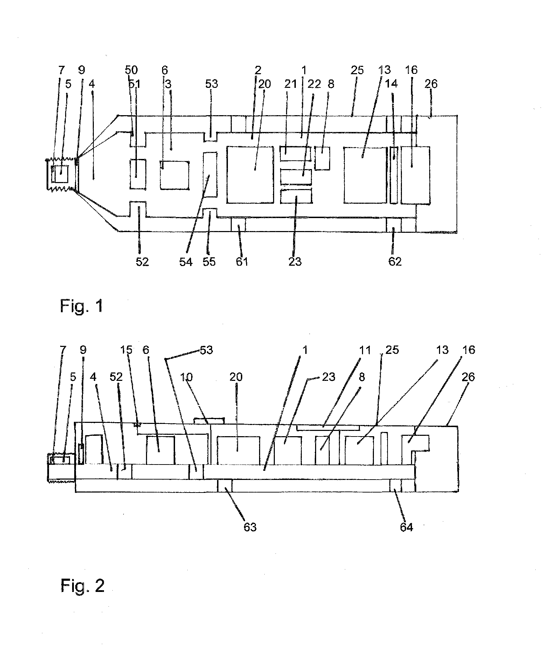

In Fig. 1 ist ein Körper 1 dargestellt, der sich in einem Gehäuse 25 befindet. An einem Ende des Körpers 1 ist ein Temperatursensor 7 bzw. ein Schwingungssenor 7.angebracht. Die Kontaktfläche dieses Sensors 7 ragt so aus dem Gehäuse 25 hervor, dass es möglich ist, das Messgerät an eine Messstelle anzulegen. Aussparungen 50, 51, 52, 53, 54 und 55 gliedern den Körper 1 in drei Bereiche 2, 3, 4. Der Temperatursensor 7 ist dabei auf den Bereich 4 angebracht, der auch einen Schwingungssensor 5 trägt. Zwischen Temperatursensor 7 und Schwingungssensor 5 ist ein Interface 9 für die Messstellenerkennung angebracht. Bereich 4 ist mit Bereich 3 des Körpers 1 über Stege verbunden, die durch die Aussparungen 50, 51 und 52 im Körper 1 gebildet werden. Auf dem Bereich 3 ein weiterer Schwingungssensor 6 angebracht. Bereich 3 ist mit dem Bereich 2 des Körpers 1 wiederum über Stege verbunden, die durch Aussparungen 53, 54 und 55 im Körper 1 gebildet werden. Der Bereich 2 trägt weitere Bauelemente, die für die Funktion des Schwingungsmessgerätes erforderlich sind, wie eine Energieversorgung 20, einen Prozessor 21, einen Speicher 22, eine Kommunikationsschnittstelle 23 und ein Inklinometer 8 . Es ist sinnvoll, mindestens eine Steckverbindung 16 vorzusehen, über die eine Aufladung der Energieversorgung 20 und/oder Datenaustausch mit einem Datensammler, einem übergeordneten Computer oder einem Computernetzwerk stattfindet. Wenn der Datenaustausch des Schwingungsmessgerätes drahtlos erfolgt, ist eine Antenne 14 vorgesehen. Zwischen Prozessor 21 und Steckverbinder 16 bzw. Antenne 14 ist eine Schnittstelle 23 zur Anpassung der zu übertragenden Daten an das Kommunikationsprotokoll vorhanden. Der Steckverbinder 16 kann aus dem Gehäuse 25 herausragen und wird durch eine Schutzkappe 26 abgedeckt. Im Gehäuse 25 ist der Körper 1 auf Elementen 61, 62 gelagert.

In Fig. 2 ist dasselbe Schwingungsmessgerät im Querschnitt dargestellt. Man erkennt dieselben Bauelemente wie in Fig. 1 sowie ein Mikrofon 15 . Am Gehäuse 25 befinden sich weiter eine oder mehrere Tasten 10 sowie eine oder mehrere Anzeigen 11.

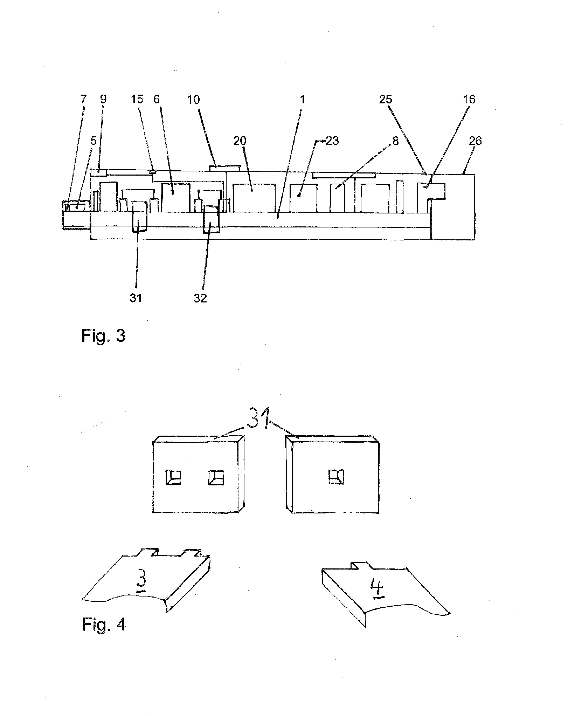

In Fig. 3 ist ein Querschnitt einer anderen Bauform des Schwingungsmessgerätes zu sehen. Hier sind die Bereiche 2, 3, 4 des Körpers 1 voneinander durch mechanische Kopplungselemente 31 und 32 getrennt. Weiter ist dargestellt, dass die Messstellenkennung 9 nicht am Körper 1 selbst, sondern am Gehäuse 25 angebracht ist. Wenn die mechanischen Kopplungselemente 31 und 32 keine elektrischen Verbindungen beinhalten, so ist auf den Bereichen 2 und 3 je ein Steckverbinder angebracht. Diese Steckverbinder werden mit einem Kabel, das um das Kopplungselement 32 herum oder durch dieses hindurch geführt ist, verbunden. Entsprechend erfolgt die elektrische Verbindung zwischen den Bereichen 3 und 4 über Steckverbinder und ein Kabel.

Die Schwingungsentkopplung zwischen dem Gehäuse 25 des Schwingungsmessgeräts und dem Körper 1 erfolgt in den Fig. 1 - 3 mit Schwingungsdämpfern 61-64. Sie kann alternativ auch durch Verwendung einer Vergussmasse erreicht werden. Soll die Schwingungskopplung zwischen Bereichen des Körpers verringert werden, so ist auch dies durch den gezielten Einsatz einer solchen Vergussmasse möglich.

Fig. 4 zeigt zwei Ansichten eines Kopplungselements 31 sowie zwei Bereiche 3 und 4 des Körpers, die in Öffnungen des Kopplungselements gesteckt werden. Ein solches Kopplungselement besteht aus einem Material, das zum gezielten Übertragen von Schwingungen geeignet ist wie Gummi, Silikon oder einem anderen Elastomer. Es kann zur Erzielung der angestrebten Schwingungseigenschaften z.B. mit Metall verstärkt sein.

Der Körper 1 ist im Normalfall aus Metall oder Kunststoff gefertigt. Zur elektrischen Kontaktierung der verschiedenen Sensoren wird darauf eine Leiterplatte angebracht. In den bevorzugten Ausführungsformen der Figuren bildet aber die Leiterplatte selbst den Körper 1. Leiterplatten werden aus Phenolharz mit Papiereinlage, Epoxidharz mit Glasfasereinlage oder in Spezialfällen aus Teflon gefertigt. Die Sensoren 5, 6, 7 sind als eigenständige Bausteine auf der Leiterplatte langebracht, die den Körper bildet. Gegenstand der Erfindung ist es nun, die Schwingungseigenschaften der Bereiche 2, 3 und 4 so aufeinander abzustimmen, dass die zwischen den einzelnen Bereichen des Körpers übertragenen Frequenzen auf die von den Sensoren zu messenden Frequenzbereiche abgestimmt sind. Während in Fig. 1 und Fig. 2 die mechanische Verbindung zwischen den Bereichen 2, 3 und 4 aus den Leiterplatten selbst durch die Bereiche verbindende Stege und geeignete Aussparungen in der Leiterplatte 50 - 55 gebildet wird, ist in Fig. 3 die mechanische Verbindung zwischen den Bereichen des Körpers durch separate Kopplungselemente 31, 32 gebildet worden. Diese mechanische Verbindung stellt nun über die Auswahl der Materialien, Größen und Massen die Übertragungseigenschaften zwischen den Bereichen des Körpers 1 für die ausgewählten Frequenzbereiche bereit. Während die der Anlegefläche des Sensors 7 am nächsten befindlichen Verbindungen zwischen den Bereichen des Körpers 1 alle für die folgenden Sensoren 5,6 relevanten Frequenzen übertragen, sind ggf. vorhandene weitere Verbindungen so ausgelegt, dass sie nur eine geringere Bandbreite an Frequenzen mechanischer Schwingungen übertragen. In anderen Worten bedeutet dies, dass die Übertragungsbandbreite der einzelnen Verbindungen zwischen den Bereichen mit zunehmender Entfernung von der Anlegefläche des Sensors abnehmen wird. Vorzugsweise sind die einzelnen Verbindungen so gestaltet, dass die Verbindung zum letzten einen Sensor tragenden Bereich, also dem am weitesten von der Anlegefläche entfernten Bereich des Körpers 1, nur den niedrigsten Frequenzbereich, z.B. von 0 bis 1 kHz überträgt. Ein Frequenzbereich von 1 oder 10 Hz bis 1 kHz ist von der ISO 10816 vorgesehen. Die vorletzte Verbindung muss nicht nur den Frequenzbereich übertragen, der für den Sensor auf dem vorletzten einen Sensor tragenden Bereich relevant ist, sondern auch den Frequenzbereich, der für den Sensor auf dem letzten einen Sensor tragenden Bereich relevant ist. Während z.B. der Sensor auf dem vorletzten einen Sensor tragenden Bereich des Körpers einen Frequenzbereich von 1 kHz bis 100 kHz erfasst, so muss doch die der Anlegefläche des Sensors zugewandte Verbindung den gesamten Frequenzbereich von 0 Hz bis 100 kHz übertragen, damit nicht nur der Sensor auf dem von der Anlegefläche aus als vorletzten gezählten Bereich des Körpers Schwingungen detektieren kann, sondern auch der Sensor auf dem letzten Bereich.

Es versteht sich, dass die Schwingungssensoren 5,6 und 7, falls 7 ein Schwingungssensor ist, dabei als Piezosensoren konventioneller Bauart ausgeführt sein können oder als MEMS-Bausteine. Auch andere Bauformen von Schwingungssensoren sind möglich.

Erfindungsgemäß werden die Stege oder Kopplungselemente so ausgebildet, dass zwischen der Messstelle und den Bereichen 3, 4 Schwingungen so übertragen werden, dass die übertragenen Frequenzen auf die verwendeten Sensoren abgestimmt sind. Wegen der geringen Baugröße wird die Erfindung bevorzugt mit in MEMS-Technologie aufgebauten Sensoren ausgeführt. Selbstverständlich können auch alle anderen piezoelektrischen Sensoren verwendet werden. Dazu sind die folgenden Parameter geeignet zu wählen:
Masse des Bereichs des Körpers und der darauf angebrachten Bauelemente, also insbesondere der Sensoren,
Trägheitsmoment des Bereichs des Körpers und der darauf angebrachten Bauelemente ebenso wie das Trägheitsmoment eines Stegs bzw. eines ggf. vorhandenen Kopplungselements zwischen den Bereichen,
Schwingungsdämpfungseigenschaften des Kopplungselements und
Federkonstante für das mechanisch die Bereiche untereinander verbindende Kopplungselement, sei es nun ein separates Kopplungselement oder ein Steg einer Leiterplatte.

Die Federkonstante lässt sich durch die Wahl des Materials des Kopplungselements beeinflussen. Die Steifigkeit im betrachteten Frequenzbereich, die durch die Materialgrößen Elastizitätsmodul und Schubmodul beschrieben wird, ist hierbei wesentlich. Die Schwingungsdämpfungseigenschaften des Kopplungselements werden insbesondere durch seine Formgebung beeinflusst. Wenn die Stege der Platine das Kopplungselement bilden, dann kann man durch die Größe der Aussparungen 50 - 55, also deren geometrische Gestaltung, diese Schwingungsdämpfungseigenschaften in besonders günstiger Weise beeinflussen.

Während die Verbindung zwischen dem Gehäuse und dem Körper eine besonders gute Schwingungsisolierung, also hohe Elastizität und geringe Steifigkeit aufweisen sollte, ist die Ankopplung an die Messstelle mit besonders geringer Dämpfung, also hoher Steifigkeit und geringer Elastizität auszuführen. Eine solche Verbindung lässt sich günstig durch die Verwendung eines Messbolzens herstellen, der in das zu vermessende Maschinenteil eingeschraubt wird. Eine für die Schwingungsmessung günstige Kopplung wird dann durch Einschrauben der Kontaktfläche des Messgeräts in den Bolzen erreicht. Es ist auch möglich, einen geeignet gestalteten Messanschluss des Schwingungsmessgeräts z.B. in eine Senkung zu drücken oder eine magnetische Verbindung oder eine Klebung vorzusehen. In den letztgenannten Fällen ist die Ankopplung für die Schwingungen aber nicht mit derselben Sicherheit gewährleistet wie beim Anschrauben an den Messbolzen.

Als Temperatursensor kann sowohl ein konventioneller Pt100-Widerstand dienen als auch ein anderer Sensor wie ein Thermoelement. Für den Sensor 5 wird bevorzugt ein MEMS-Baustein der Firma Analog Devices vom Typ ADXL001 verwendet, der in eine Raumrichtung misst und mit einer Resonanzfrequenz von 22 kHz als Aufnehmer für Schockwellen geeignet ist. Solche Schockwellen entstehen durch die Bewegung mechanisch beschädigter Bereiche z.B. von Wälzkörpern beim Aufprall auf den Innenoder Außenring eines Lagers. Zur Messung von Schockpulsen reicht ein eindimensional messender Schwingungsaufnehmer 5 aus.

Der Schwingungssensor 6 auf dem Bereich 3 ist in einer bevorzugten Ausführungsform ein Baustein vom Typ LIS3DH der Firma STMicroelektronics, der lineare Schwingungen in allen drei Raumrichtungen messen kann und sich für Schwingungsmessungen im Bereich von 10 Hz bis 20 kHz besonders gut eignet. Eine Untergrenze von 10 Hz für den Frequenzbereich ist dann sinnvoll, wenn das Schwingungsmessgerät nur von Hand gegen die Messstelle gedrückt wird. Dann sind Schwingungen von unter 10 Hz zumeist auf die Bewegungen der Hand bzw. des Arms der das Schwingungsmessgerät haltenden Person zurückzuführen. Wenn eine Ankopplung des Schwingungsmessgeräts über einen Magneten, eine Klebung oder einen Messbolzen erfolgt, kann die untere Grenzfrequenz für die Schwingungsmessung auch geringer gewählt werden.

Auf dem weiteren Bereich 2 des Körpers sind die im Folgenden genannten Bauelemente angeordnet. Als Energiequelle 20 kann eine aufladbare Knopfzelle vom Typ LIR 2450 verwendet werden. Die Aufladung dieser Knopfzelle erfolgt über den Steckverbinder 16. Alternativ kann sie auch von einem in das Gehäuse 25 integrierten Energy Harvester vorgenommen werden. Andere Bauformen des Energiespeichers sind auswechselbare Batterien oder Kondensatoren.

Es ist ebenso möglich, eines oder mehrere in den Fig. gezeigten Bauelemente nicht auf dem weiteren Bereich 2, sondern auf den Bereichen 3 und/oder 4 anzuordnen, wenn die Eigenschaften dieser Bauelemente bei der Parametrierung des Frequenzverhaltens der Bereiche 3 und/oder 4 günstig genutzt werden können. Wenn alle der hier im Bereich 2 angeordneten Bauelemente auf die Bereiche 3 und/oder 4 verteilt werden können, kann auf den weiteren Bereich 2 ganz verzichtet werden.

Außer den Sensoren wird von der Energiequelle 20 auch der Prozessor 21 mit Energie versorgt. Dieser Prozessor kann über Kanäle mit Analog/Digital Wandlern für die analogen Ausgangssignale der Sensoren. Bei MEMS-Sensoren enthält der Prozessor 21 eine serielle Schnittstelle. Dem Prozessor ist weiter ein Speicher 22 zugeordnet sowie eine Schnittstelle 23 zur externen Kommunikation. Je nach Ausführungsform dieser Bauelemente kann der Prozessor nicht nur das Signal der Sensoren entgegennehmen und zusammen mit dem Zeitpunkt der Messung im Speicher 22 ablegen. Er kann auch aus den gemessenen Werten und ihrem Zeitverlauf programmgesteuert weiterführende Berechnungen vornehmen. Solche Berechnungen können die Ermittlung von Mittelwerten, die Berechnung einer Hüllkurve oder eine digitale Fouriertransformation sein. Die Ergebnisse dieser Berechnungen werden dann wieder im Speicher 22 abgelegt. Wenn der Prozessor 21 über die Schnittstelle 23 eine Verbindung mit einem anderen Datensammler, einem übergeordneten Rechner oder einem Computernetzwerk aufgebaut hat, kann er den Zeitverlauf der mit den Sensoren gemessenen Daten übertragen und/oder die Ergebnisse der vorstehend genannten Berechnungen. Der Speicher 22 kann ganz oder teilweise in Form einer wechselbaren Flash- Speicherkarte wie SD, miniSD oder microSD ausgeführt sein.

Auf dem Bereich 2 mit Energiequelle 20 und Prozessor 21 ist zudem ein ein- oder mehrachsiges Inklinometer 8 angeordnet, das ebenfalls bevorzugt als MEMS-Baustein ausgeführt wird. Das Signal dieses Inklinometers wird ebenfalls im Prozessor 21 verarbeitet. Es dient dazu, bei Schwingungsmessungen an Maschinen mit rotierenden Teilen eine Unterscheidung vorzunehmen, ob die Messung in radialer oder axialer Richtung in Bezug auf die Rotationsachse vorgenommen wird. Gerade bei der Verwendung von MEMS-Bausteinen als Schwingungssensoren ist es eine im Sinne der Erfindung bevorzugte Lösung, wenn das Inklinometer nicht auf dem Bereich 2 als separater Baustein angeordnet ist, sondern in einen MEMS-Baustein 5 oder 6, der auch einen Schwingungssensor enthält.

Die beschriebene Richtungserkennung geschieht vorteilhaft in Verbindung mit der Messstellenerkennung 9. Eine solche Messstellenerkennung kann mit verschiedenen Aufnehmern erfolgen. Beispiele sind die in der EP 0 194 333 und der EP 0 656 138 beschriebenen mechanischen (in Verbindung mit Schaltern) und magnetischen Verfahren zur Messstellenerkennung. Eine optische Erkennung der Messstelle über Scannen eines Barcode kann ebenso erfolgen wie eine Abfrage der Identität der Messstelle über eine Funkverbindung, z.B. nach dem RFID- Verfahren. Wenn die Identität der Messstelle dem Schwingungsmessgerät bekannt ist, kann das Inklinometer dazu verwendet werden, die korrekte Orientierung des Messgerätes zu überprüfen. Schwingungsmessungen in einer radialen Richtung in Bezug auf ein rotierendes Bauelement werden oft an Messstellen vorgenommen, an denen es erforderlich ist, das Schwingungsmessgerät mit dem anzukoppelnden Ende nach unten an die Messstelle anzulegen. Beim in den Fig. dargestellten Schwingungsmessgerät ist das anzukoppelnde Ende in der Nähe des Temperatursensors 7. Die geeignete Orientierung für eine Messung in radialer Richtung wird mit dem Inklinometer 8 überprüft und an den Prozessor 21 übermittelt. Zur Messung in axialer Richtung sind die Messstellen zumeist so angebracht, dass das Schwingungsmessgerät so an eine Messstelle anzulegen ist, wie es in den Fig. dargestellt ist, also mit der Längsrichtung in horizontaler Orientierung.

Es ist sinnvoll, die Vorrichtung 9 zur Identifikation der Messstelle nicht genau zwischen Temperatursensor 7 und Schwingungssensor 5 anzuordnen, sondern sie in geeigneter Weise so mit dem Gehäuse 25 zu verbinden, dass eine Sichtverbindung zur Identifikationseinrichtung an der Messstelle besteht. Bei einer Identifikation der Messstelle über einen Barcode ist ein Fenster im Gehäuse vorzusehen. Wird ein RFID-Verfahren zur Messstellenidentifikation verwendet, muss das Fenster für die verwendeten elektromagnetischen Wellen durchlässig sein. Bei mechanischer oder magnetischer Messstellenidentifikation sind die entsprechenden Schalter oder Magnetsensoren ebenfalls an der der Messstelle zugewandten Seite des Messgerätes neben den Temperatursensor bzw. um diesen herum anzuordnen.

Je nach Gestaltung des Schwingungsmessgerätes wird die Messung auf verschiedenen Wegen ausgelöst. Eine Möglichkeit besteht darin, die Messung durch Druck auf eine Taste 10 zu starten und zu stoppen. Wenn die Kopplung an die Messstelle über einen Stud genannten Messbolzen erfolgt, kann die Auslösung der Messung nach Zustandekommen des mechanischen Kontakts, der z.B. über einen Schalter ermittelt wird, zeitverzögert erfolgen. Beim Anlegen des Messgerätes an die Messstelle kann die Auslösung der Messung auch programmgesteuert erfolgen, wenn das Inklinometersignal eine geeignete Orientierung des Messgerätes anzeigt und/oder wenn die Messstellenerkennung die Messstelle identifiziert hat.

Ein Programm im Prozessor 21 kann auch nach Erhalt des Ergebnisses der Abfrage der Identität der Messstelle und/oder bei Vorliegen eines geeigneten Eingangssignals vom Inklinometer über eine Anzeige 11 signalisieren, dass es nun bereit ist, eine Messung vorzunehmen. Diese Messung kann dann über eine Taste 10 ausgelöst werden. Die Anzeige kann eine Leuchtdiode sein oder ein komplexeres Display zur Anzeige von Zeichen und grafischen Elementen wie z.B. ein LCD- oder OLED-Display. Auch Kombinationen dieser Anzeigeelemente sind möglich.

Über das Mikrofon 15 ist es möglich, Spracheingaben vorzunehmen. Solche Spracheingaben können einerseits die Messstellenidentifikation beinhalten, die der Benutzer des Schwingungsmessgerätes an der Messstelle abliest, wo sie z. B. auf einem Tag hinterlegt sind. Die Spracheingaben kann der Benutzer aber auch vornehmen, um Beobachtungen über den Maschinenzustand aufzunehmen, in denen er zum Beispiel auf Ölaustritt hinweist. Wenn die Kapazität des Prozessors 21 ausreicht, können diese Informationen dann direkt in dem Schwingungsmessgerät ausgewertet werden. Es ist aber auch möglich, diese Auswertung an einem anderen Rechner vorzunehmen, dem die Daten aus dem Schwingungsmessgerät inklusive der Spracheingaben über die Schnittstelle 23 übermittelt wurden.

Die Schnittstelle 23 zur Kommunikation mit einem anderen Datensammler, übergeordneten Computer oder einem Computernetzwerk kann in verschiedenen Formen ausgeführt werden. Es kann sich dabei um eine USB- Schnittstelle handeln. Auch andere drahtgebundene Schnittstellen sind möglich, wie RS232, LAN oder andere. Für drahtgebundene Schnittstellen wird die Steckverbindung 16 benutzt. Auch eine drahtlose Schnittstelle kann vorgesehen werden. Die Ausführungsformen WUSB, Bluetooth, WLAN lassen sich mit handelsüblichen Bausteinen realisieren. Dann verwendet die Schnittstelle 23 die Antenne 14 zur Kommunikation.

## Patentansprüche

1. Tragbares Schwingungsmessgerät, enthaltend ein Gehäuse (25), einen Körper (1), mindestens zwei Schwingungssensoren (5, 6), und einen Anlegebereich zum Anlegen des Messgeräts an eine Messstelle eines Messobjekts und zum Einleiten von Schwingungen der Messstelle in den Körper, **dadurch gekennzeichnet, dass** eine Schwingungsentkopplung ziwschen Gehäuse und Körper vorgesehen ist, wobei Körper und Schwingungssensoren mehrstückig ausgeführt sind, der Körper aus mindestens zwei durch mechanische Verbindungen gekoppelte Bereichen (2, 3, 4) besteht und mindestens zwei dieser Bereiche (2, 3, 4) einen Schwingungssensor (5, 6) tragen, die Schwingungssensoren (5, 6) tragenden Bereiche (2, 3, 4) des Körpers (1) an angrenzende Bereiche (2, 3, 4) des Körpers (1) gekoppelt sind, wobei die mechanische Verbindung zwischen einem einen Schwingungssensor tragenden Bereich (2, 3, 4) des Körpers (1) und einem angrenzenden Bereich mittels Anpassung der geometrischen Gestaltung und/oder Anpassung des Materials des Körpers zwischen den Bereichen oder eines Kopplungselements zwischen den Bereichen so gestaltet ist, dass ein für diesen Schwingungssensor vorbestimmter Frequenzbereich der mittels des Anlegebereichs in den Körper eingeleiteten Schwingungen über die entsprechende Verbindung übertragen wird.

2. Schwingungsmessgerät nach Anspruch 1, mit zwei einen Schwingungssensor tragenden Bereichen.

3. Schwingungsmessgerät nach Anspruch 2, wobei die Schwingungssensoren tragenden Bereiche mittels der mechanischen Verbindung aneinander gekoppelt sind und ein einen Schwingungssensor tragender Bereich an einen weiteren Bereich gekoppelt ist.

4. Schwingungsmessgerät nach einem der Ansprüche 1-3, wobei der Körper mit den Bereichen eine Leiterplatte ist.

5. Schwingungsmessgerät nach einem der vorhergehenden Ansprüche, wobei mindestens einer der Schwingungssensoren ein MEMS-Sensor ist.

6. Schwingungsmessgerät nach einem der vorhergehenden Ansprüche, wobei mindestens einer der Schwingungssensoren ein die piezoelektrischer Sensor ist.

7. Schwingungsmessgerät nach einem der vorhergehenden Ansprüche, wobei der Frequenzbereich eines Schwingungssensors von 1 Hz, 2 Hz oder 10 Hz bis 2 kHz und der Frequenzbereich eines weiteren Schwingungssensors von 1 kHz bis 100 kHz gewählt werden.

8. Schwingungsmessgerät nach einem der vorhergehenden Ansprüche, wobei mindestens einer der Schwingungssensoren für mehr als eine Raumrichtung empfindlich ist.

9. Schwingungsmessgerät nach Anspruch 3, wobei der weitere Bereich mit dem Gehäuse mechanisch verbunden ist.

10. Schwingungsmessgerät nach einem der vorhergehenden Ansprüche, wobei das Schwingungsmessgerät mit einer Messstellenkennung ausgestattet ist.

11. Schwingungsmessgerät nach einem der vorhergehenden Ansprüche, bei dem die Messung über die Messstellenkennung aktiviert wird.

12. Schwingungsmessgerät nach dem vorhergehenden Anspruch, das über einen Energy Harvester mit elektrischer Energie versorgt wird.

13. Schwingungsmessgerät nach einem der vorhergehenden Ansprüche, das mit einem Temperatursensor ausgestattet ist.

14. Schwingungsmessgerät nach einem der vorhergehenden Ansprüche, das mit einem Inklinometer zur Ermittlung der räumlichen Orientierung des Schwingungsmessgeräts ausgerüstet ist.

15. Schwingungsmessgerät nach einem der vorhergehenden Ansprüche, das an einem Datensammler, einen übergeordneten Computer und/oder ein Rechnernetzwerk über eine drahtlose Schnittstelle koppelbar ist.

16. Schwingungsmessgerät nach einem der vorhergehenden Ansprüche, das an einem Datensammler, einen übergeordneten Computer und/oder ein Rechnernetzwerk über eine drahtgebundene Schnittstelle koppelbar ist.

17. Schwingungsmessgerät nach Anspruch 16, das an einem Datensammler, einen übergeordneten Computer und/oder ein Rechnernetzwerk über eine USB-Schnittstelle koppelbar ist.

## Claims

1. Portable vibration measuring device, containing a housing (25), a body (1), at least two vibration sensors (5, 6), and an application area for applying the measuring device to a measuring location of an object to be measured and for introducing vibrations of the measuring location into the body, **characterized in that** vibration decoupling between housing and body is provided, wherein body and vibration sensors are implemented in multiple parts, the body comprises at least two regions (2, 3, 4) coupled by mechanical connections and at least two of these regions (2, 3, 4) carry a vibration sensor (5, 6), the regions (2, 3, 4) of the body (1) that carry vibration sensors (5, 6) are coupled to adjacent regions (2, 3, 4) of the body (1), wherein the mechanical connection between a region (2, 3, 4) of the body (1) carrying a vibration sensor and an adjacent region is configured, by means of adapting the geometric shape and/or adapting the material of the body between the regions or a coupling element between the regions, such that a frequency range that is predetermined for this vibration sensor of the vibrations introduced into the body by means of the application area is transmitted via the corresponding connection.

2. Vibration measuring device according to Claim 1, having two regions carrying a vibration sensor.

3. Vibration measuring device according to Claim 2, wherein the regions carrying vibration sensors are coupled to one another by means of the mechanical connection, and a region carrying a vibration sensor is coupled to a further region.

4. Vibration measuring device according to one of Claims 1-3, wherein the body having the regions is a circuit board.

5. Vibration measuring device according to one of the preceding claims, wherein at least one of the vibration sensors is an MEMS sensor.

6. Vibration measuring device according to one of the preceding claims, wherein at least one of the vibration sensors is a piezoelectric sensor.

7. Vibration measuring device according to one of the preceding claims, wherein the frequency range of one vibration sensor is chosen from 1 Hz, 2 Hz or 10 Hz to 2 kHz, and the frequency range of a further vibration sensor is chosen from 1 kHz to 100 kHz.

8. Vibration measuring device according to one of the preceding claims, wherein at least one of the vibration sensors is sensitive to more than one spatial direction.

9. Vibration measuring device according to Claim 3, wherein the further region is connected mechanically to the housing.

10. Vibration measuring device according to one of the preceding claims, wherein the vibration measuring device is equipped with a measuring location identifier.

11. Vibration measuring device according to one of the preceding claims, in which the measurement is activated via the measuring location identifier.

12. Vibration measuring device according to the preceding claim, which is supplied with electric power via an energy harvester.

13. Vibration measuring device according to one of the preceding claims, which is equipped with a temperature sensor.

14. Vibration measuring device according to one of the preceding claims, which is equipped with an inclinometer for determining the spatial orientation of the vibration measuring device.

15. Vibration measuring device according to one of the preceding claims, which can be coupled to a data collector, a higher-order computer and/or a computer network via a wire-free interface.

16. Vibration measuring device according to one of the preceding claims, which can be coupled to a data collector, a higher-order computer and/or a computer network via a wire-bound interface.

17. Vibration measuring device according to Claim 16, which can be coupled to a data collector, a higher-order computer and/or a computer network via a USB interface.

## Revendications

1. Appareil portable de mesure de vibrations, contenant un boîtier (25), un corps (1), au moins deux capteurs (5, 6) de vibrations et une partie de pose destinée à poser l'appareil de mesure sur un emplacement de mesure d'un objet de mesure et pour introduire les vibrations de l'emplacement de mesure dans le corps,
**caractérisé en ce que**
un découplage de vibrations est prévu entre le boîtier et le corps, le corps et les capteurs de vibrations étant réalisés d'un seul tenant, le corps étant constitué d'au moins deux parties (2, 3, 4) accouplées par des liaisons mécaniques et au moins deux de ces parties (2, 3, 4) portant un capteur (5, 6) de vibrations, les parties (2, 3, 4) du corps (1) portant les capteurs (5, 6) de vibrations étant accouplées à des parties adjacentes (2, 3, 4) du corps (1), la liaison mécanique entre une partie (2, 3, 4) du corps (1) portant un capteur de vibrations et une partie adjacente étant configurée par adaptation de la forme géométrique et/ou adaptation du matériau du corps entre les parties ou par l'adaptation d'un élément d'accouplement entre les parties de telle sorte qu'une plage de fréquence, prédéterminée pour ce capteur de vibrations, des vibrations introduites dans le corps au moyen de la partie de pose soit transmise par l'intermédiaire de la liaison associée.

2. Appareil de mesure de vibrations selon la revendication 1, doté de deux parties portant un capteur de vibrations.

3. Appareil de mesure de vibrations selon la revendication 2, dans lequel les parties portant les capteurs de vibrations sont accouplées l'une à l'autre au moyen de la liaison mécanique et une partie portant un capteur de vibrations est accouplée à une autre partie.

4. Appareil de mesure de vibrations selon l'une des revendications 1 à 3, dans lequel le corps présentant les parties est une carte de circuit.

5. Appareil de mesure de vibrations selon l'une des revendications précédentes, dans lequel au moins l'un des capteurs de vibrations est un capteur MEMS.

6. Appareil de mesure de vibrations selon l'une des revendications précédentes, dans lequel au moins l'un des capteurs de vibrations est un capteur piézoélectrique.

7. Appareil de mesure de vibrations selon l'une des revendications précédentes, dans lequel la plage de fréquences sélectionnée pour un capteur de vibrations est de 1 Hz, 2 Hz ou 10 Hz à 2 kHz et la plage de fréquences sélectionnée pour un autre capteur de vibrations est de 1 kHz à 100 kHz.

8. Appareil de mesure de vibrations selon l'une des revendications précédentes, dans lequel au moins l'un des capteurs de vibrations est sensible à plus d'une direction spatiale.

9. Appareil de mesure de vibrations selon la revendication 3, dans lequel l'autre partie est reliée mécaniquement au boîtier.

10. Appareil de mesure de vibrations selon l'une des revendications précédentes, dans lequel l'appareil de mesure de vibrations est configuré avec une reconnaissance de l'emplacement de mesure.

11. Appareil de mesure de vibrations selon l'une des revendications précédentes, dans lequel la mesure est activée par l'intermédiaire de la reconnaissance de l'emplacement de mesure.

12. Appareil de mesure de vibrations selon la revendication précédente, alimenté en énergie électrique par un "Energy Harvester".

13. Appareil de mesure de vibrations selon l'une des revendications précédentes, équipé d'un capteur de température.

14. Appareil de mesure de vibrations selon l'une des revendications précédentes, équipé d'un inclinomètre permettant de déterminer l'orientation spatiale de l'appareil de mesure de vibrations.

15. Appareil de mesure de vibrations selon l'une des revendications précédentes, apte à être couplé à un collecteur de données, à un ordinateur hiérarchiquement supérieur et/ou à un réseau de calculateur par une interface sans fil.

16. Appareil de mesure de vibrations selon l'une des revendications précédentes, apte à être couplé à un collecteur de données, à un ordinateur hiérarchiquement supérieur et/ou à un réseau de calculateur par une interface filaire.

17. Appareil de mesure de vibrations selon la revendication 16, apte à être couplé à un collecteur de données, à un ordinateur hiérarchiquement supérieur et/ou à un réseau de calculateur par une interface USB.
